(19) **Europäisches Patentamt / European Patent Office / Office européen des brevets**

(11) **EP 4 414 326 A1**

(12) # EUROPEAN PATENT APPLICATION
published in accordance with Art. 153(4) EPC

(43) Date of publication:
**14.08.2024 Bulletin 2024/33**

(21) Application number: **22878370.0**

(22) Date of filing: **27.09.2022**

(51) International Patent Classification (IPC):
**C01B 32/00** (2017.01)　　**C01B 32/05** (2017.01)
**C04B 35/52** (2006.01)　　**H01G 11/24** (2013.01)
**H01G 11/42** (2013.01)　　**H01G 11/86** (2013.01)
**H01M 4/587** (2010.01)

(52) Cooperative Patent Classification (CPC):
**C01B 32/00; C01B 32/05; C04B 35/52;
H01G 11/24; H01G 11/42; H01G 11/86;
H01M 4/587; Y02E 60/10**

(86) International application number:
**PCT/JP2022/035918**

(87) International publication number:
**WO 2023/058500 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.10.2021 JP 2021164241
21.07.2022 JP 2022116673**

(71) Applicant: **Kuraray Co., Ltd.
Kurashiki-shi, Okayama 710-0801 (JP)**

(72) Inventors:
- **NISHIMURA, Keiichi
  Kurashiki-shi, Okayama 710-0801 (JP)**
- **NISHIMURA, Naohiro
  Kurashiki-shi, Okayama 710-0801 (JP)**
- **NISHIUMI, Kosuke
  Kurashiki-shi, Okayama 710-0801 (JP)**

(74) Representative: **Müller-Boré & Partner
Patentanwälte PartG mbB
Friedenheimer Brücke 21
80639 München (DE)**

(54) **CARBONACEOUS MATERIAL, NEGATIVE ELECTRODE FOR POWER STORAGE DEVICES, POWER STORAGE DEVICE, AND METHOD FOR PRODUCING CARBONACEOUS MATERIAL**

(57)　The present invention relates to a carbonaceous material having a nitrogen element content of 1.0% by mass or more and a hydrogen element content of 0.1% by mass or less, both measured by element analysis, and a phosphorus element content, measured by X-ray fluorescence analysis, of 0.5% by mass or more and 2.0% by mass or less.

EP 4 414 326 A1

**Description**

TECHNICAL FIELD

The present invention relates to a carbonaceous material, a negative electrode for a power storage device, a power storage device, and a method for producing a carbonaceous material.

BACKGROUND ART

Power storage devices, typified by secondary battery and capacitor, stand on electrochemical phenomenon, and have been widely used. For example, lithium ion secondary battery, which is one of the power storage devices, has been widely used in small portable devices such as mobile phone and notebook computer. A non-graphitizable carbon, allowed for doping (charging) and undoping (discharging) lithium beyond a theoretical capacity of graphite of 372 mAh/g, has been developed as a negative electrode material of the lithium ion secondary battery (see Patent Document 1, for example), and has been used.

The non-graphitizable carbon is obtainable from carbon sources such as petroleum pitch, coal pitch, phenolic resin, or plant. Among these carbon sources, plant-derived raw materials such as sugar compounds have drawn attention, for their possibility of stable supply through cultivation, and availability at low cost. In addition, the carbonaceous materials obtainable by calcining the plant-derived carbon materials have a lot of pores, from which a good charge/discharge capacity is expectable (see Patent Documents 1 and 2, for example).

Also a carbonaceous material having various elements other than the carbon element adjusted to specific contents (Patent Document 3) has been known, as a carbonaceous material typically applicable to a negative electrode of the lithium ion secondary battery and so forth.

PRIOR ART DOCUMENTS

PATENT DOCUMENTS

Patent Document 1: WO2019/009332 A
Patent Document 2: WO2019/009333 A
Patent Document 3: JP-A-2009-200014

SUMMARY OF THE INVENTION

PROBLEMS TO BE SOLVED BY THE INVENTION

Although having been known and used as the negative electrode material, the carbonaceous material has been still demanded to have larger capacity and improved current efficiency of the negative electrode, in various applications including power storage device. The negative electrode is also required to maintain large discharge capacity even after repetitive charging-discharging. It is therefore an object of the present invention to provide a carbonaceous material that can demonstrate, when used as a negative electrode layer, large discharge capacity per weight and high current efficiency, and can provide a power storage device capable of maintaining a high discharge capacity even after repetitive charging-discharging. It is another object of the present invention to provide a negative electrode for a power storage device containing such carbonaceous material, and a power storage device that contains such negative electrode for a power storage device.

SOLUTIONS TO THE PROBLEMS

The present inventors found, after our intensive studies, that a carbonaceous material that can demonstrate large discharge capacity per weight and high current efficiency, and is suitable for a power storage device capable of maintaining a high discharge capacity even after repetitive charging-discharging, is obtainable by adjusting nitrogen element content, hydrogen element content, and phosphorus element content in the carbonaceous material within predetermined ranges.

That is, the present invention encompasses the following preferred embodiments.

[1] A carbonaceous material having a nitrogen element content of 1.0% by mass or more and a hydrogen element content of 0.1% by mass or less, both measured by element analysis, and a phosphorus element content, measured by X-ray fluorescence analysis, of 0.5% by mass or more and 2.0% by mass or less.

[2] The carbonaceous material according to [1], having a carbon interplanar spacing ($d_{002}$), measured by X-ray diffractometry, of 3.65 Å or more.

[3] The carbonaceous material according to [1] or [2], having an oxygen element content, measured by element analysis, of less than 1.0% by mass.

[4] The carbonaceous material according to any one of [1] to [3], having an oxygen element content, measured by XPS, of less than 18% by mass.

[5] The carbonaceous material according to any one of [1] to [4], demonstrating a Raman spectrum observed by laser Raman spectrometry, in which a peak at around 1360 $cm^{-1}$ has a half width of 210 $cm^{-1}$ or more.

[6] The carbonaceous material according to any one of [1] to [5], for use as a negative electrode carbonaceous material of a power storage device.

[7] A negative electrode for a power storage device, comprising the carbonaceous material according to any one of [1] to [6].

[8] A power storage device comprising the negative electrode for a power storage device according to [7].

[9] A method for producing the carbonaceous material according to any one of [1] to [6], the method comprising at least:

(1) a step of mixing a sugar skeletal compound with a nitrogen-containing compound to obtain a mixture;
(2) a step of heat-treating the mixture in an inert gas atmosphere at 500 to 900°C to obtain a carbonized product;
(3) a step of crushing and/or classifying the carbonized product; and
(4) a step of heat-treating the thus crushed and/or classified carbonized product in an inert gas atmosphere at 1200 to 1600°C to obtain the carbonaceous material, and the method further comprising:

(a) a step of mixing, prior to the heat treatment in the step (4), the sugar skeletal compound, the mixture that contains the compound, or the carbonized product of the mixture, with a phosphorus-containing compound.

[10] The method according to [9], wherein the step (4) is conducted in presence of a volatile organic substance, or the method further comprising, subsequent to the step (4), a step (5) of further conducting the heat treatment in presence of a volatile organic substance.

EFFECTS OF THE INVENTION

The present invention can provide a carbonaceous material that can demonstrate large discharge capacity per weight and high current efficiency, and is suitable for a power storage device capable of maintaining a high discharge capacity even after repetitive charging-discharging. In the present specification, a product obtained by multiplying the initial current efficiency and the capacity retention after repetitive charging-discharging will be defined as total efficiency, and a battery is determined to have good performance if the total efficiency is high.

DETAILED DESCRIPTION

Embodiments of the present invention will be detailed below. The description is, however, not intended to limit the present invention to the following embodiments.

In the present specification, the power storage device refers to any device that includes a carbonaceous material-containing negative electrode, and makes use of an electrochemical phenomenon. More specifically, the power storage device typically includes secondary batteries such as lithium ion secondary battery, a nickel-hydride secondary battery, or nickel-cadmium secondary battery; and capacitors such as electric double layer capacitor, which are repetitively usable through charging. Among these, the power storage device may be secondary battery, particularly nonaqueous electrolyte secondary battery (lithium ion secondary battery, sodium ion battery, lithium sulfur battery, lithium air battery, all-solid-state battery, organic radical battery, etc.), and among others, may be lithium ion secondary battery.

The carbonaceous material of the present invention can demonstrate large discharge capacity per weight and high current efficiency, and is suitable for a power storage device capable of maintaining a high discharge capacity even after repetitive charging-discharging, and has a nitrogen element content of 1.0% by mass or more and a hydrogen element content 0.1% by mass or less, both measured by element analysis, and a phosphorus element content, measured by X-ray fluorescence analysis, of 0.5% by mass or more and 2.0% by mass or less.

The carbonaceous material of the present invention has a phosphorus element content, measured by X-ray fluorescence analysis, of 0.5% by mass or more and 2.0% by mass or less. The phosphorus element content is an analytical value obtained by X-ray fluorescence analysis of the carbonaceous material. When the phosphorus element content is less than 0.5% by mass, the carbonaceous material will have less sites where lithium ion can adsorb and desorb during charging-discharging, and will fail to sufficiently increase the discharge capacity and the current efficiency per weight. From the viewpoint of enhancing the discharge capacity and the current efficiency, the phosphorus element content is preferably 0.6% by mass or more, more preferably 0.7% by mass or more, even more preferably 0.9% by mass or more, yet more preferably 1.2% by mass or more, and particularly preferably 1.3% by mass or more. On the other hand, with the phosphorus element content exceeding 2.0% by mass, the carbonaceous material will tend to have more sites where lithium ion is irreversibly adsorbed, and will be less likely to maintain the capacity in repetitive charging-discharging, making it difficult to maintain high discharge capacity. From the viewpoint of maintaining high discharge capacity even after repetitive charging-discharging, the carbonaceous material of the present invention preferably has a phosphorus element content, measured by X-ray fluorescence analysis, of 2.0% by mass or less, which is more preferably 1.9% by mass or less, even more preferably 1.8% by mass or less, and yet more preferably 1.75% by mass or less. The phosphorus element content of the carbonaceous material, measured by X-ray fluorescence analysis, is adjustable within the aforementioned ranges, typically by controlling a possible amount of addition of the phosphorus element-containing compound, and, temperature and time for heat treatment, when preparing the carbonaceous material.

The carbonaceous material of the present invention has a nitrogen element content and a hydrogen element content, both measured by element analysis, of 1.0% by mass or more, and 0.1% by mass or less, respectively. The nitrogen element content and the hydrogen element content are analytical values obtainable from the element analysis of the carbonaceous material. The present inventors found that, with the nitrogen element content adjusted to 1.0% by mass or more, and with the hydrogen element content adjusted to 0.1% by mass or less, the carbonaceous material will have further enhanced discharge capacity and current efficiency as compared with a carbonaceous material that contains phosphorus element only, or with a carbonaceous material having a high hydrogen element content, and will be able to maintain high discharge capacity even after repetitive charging-discharging. The carbonaceous material that contains phosphorus element but no nitrogen element has occasionally resulted in declined current efficiency, due to susceptibility of phosphorus element to oxidation. In contrast, the carbonaceous material that contains both nitrogen element and phosphorus element tends to cause reduction of phosphorus to decrease the oxygen element content, and this presumably enhances the current efficiency, although the reason remains unclear. In addition, when the nitrogen element content is less than 1.0% by mass, the carbonaceous material will have less sites where lithium ion can adsorb and desorb during charging-discharging, due to proximity of carbon planes, and is thus considered to fail to sufficiently increase the discharge capacity per weight also from this viewpoint. Meanwhile, with the hydrogen element content exceeding 0.1% by mass, the carbonaceous material will be likely to cause a side reaction typically between Li ion and an electrolyte solution to increase irreversible capacity of Li ion, and this presumably makes it difficult to maintain high discharge capacity even after repetitive charging-discharging. In contrast, such side reaction may be presumably suppressed by controlling the hydrogen element content to 0.1% by mass or less.

From the viewpoint of enhancing the discharge capacity and the current efficiency, the nitrogen element content is preferably 1.10% by mass or more, more preferably 1.15% by mass or more, and even more preferably 1.20% by mass or more. From the viewpoint of suppressing decrease in the discharge capacity after repetitive charging-discharging, and improving the current efficiency, the upper limit of the nitrogen element content is preferably 8.0% by mass or less, more preferably 6.0% by mass or less, even more preferably 5.0% by mass or less, yet more preferably 4.0% by mass or less, furthermore preferably 2.0% by mass or less, again furthermore preferably 1.5% by mass or less, especially more preferably 1.30% by mass or less, and again especially more preferably 1.28% by mass or less. The nitrogen element content of the carbonaceous material, measured by element analysis, is adjustable within the aforementioned ranges, typically by controlling a possible amount of addition of the nitrogen-containing compound, and, temperature and time for heat treatment, when preparing the carbonaceous material.

From the viewpoint of suppressing decrease in the discharge capacity after repetitive charging-discharging, and improving the current efficiency, the hydrogen element content is preferably 0.10% by mass or less, more preferably 0.08% by mass or less, even more preferably 0.06% by mass or less, and yet more preferably 0.05% by mass or less. The lower limit of the hydrogen element content is 0% by mass or more. The hydrogen element content of the carbonaceous material, measured by element analysis, is adjustable within the aforementioned ranges, typically by controlling a possible amount of addition of the nitrogen-containing compound and the phosphorus-containing compound, and, temperature and time for heat treatment, when preparing the carbonaceous material.

The carbon interplanar spacing ($d_{002}$), measured by X-ray diffractometry, of the carbonaceous material of the present invention is preferably 3.65 Å or more, more preferably 3.68 Å or more, even more preferably 3.70 Å or more, yet more preferably 3.71 Å or more, and particularly preferably 3.73 Å or more, from the viewpoint of widening the carbon interplanar spacing for smooth migration of lithium ion, and of fully developing pores to increase occlusion sites for clustered lithium, thereby increasing the discharge capacity and the current efficiency per weight. Since the carbonaceous material will have enhanced execution capacity per volume, and will be more likely to enhance the discharge capacity per volume by appropriately reducing the volume through appropriate reduction in the carbon interplanar spacing ($d_{002}$), the upper limit of $d_{002}$ is preferably 4.00 Å or less, more preferably 3.95 Å or less, even more preferably 3.90 Å or less, and yet more preferably 3.85 Å or less. The carbon interplanar spacing ($d_{002}$) is analyzed by X-ray diffractometry with use of the Bragg equation, and is more specifically analyzed by a method described in Examples. The carbon interplanar spacing ($d_{002}$) is adjustable within the aforementioned ranges, typically by controlling a possible amount of addition of the nitrogen-containing compound, and, temperature and time for heat treatment, when preparing the carbonaceous material.

In one preferred embodiment of the present invention, from the viewpoint of increasing the discharge capacity of an electrode produced with use of the carbonaceous material, the carbonaceous material of the present invention preferably demonstrates a half width of the peak at around 1360 $cm^{-1}$, in a Raman spectrum observed by laser Raman spectrometry, of 210 $cm^{-1}$ or more, more preferably 220 $cm^{-1}$ or more, even more preferably 230 $cm^{-1}$ or more, and yet more preferably 240 $cm^{-1}$ or more. Now, the peak at around 1360 $cm^{-1}$ is a Raman peak usually referred to as the D band, which is a peak caused by disorder/defect in the graphite structure. The peak at around 1360 $cm^{-1}$ is usually observed in the range from 1345 $cm^{-1}$ to 1375 $cm^{-1}$, and preferably from 1350 $cm^{-1}$ to 1370 $cm^{-1}$. The Raman spectrum is measured typically with use of a Raman spectrometer, under the conditions described in Examples. The half width of the peak at around 1360 $cm^{-1}$ is adjustable within the aforementioned ranges, typically by controlling a possible amount of addition of the nitrogen-containing compound, and, temperature and time for heat treatment, when preparing the carbonaceous material.

In one preferred embodiment of the present invention, from the viewpoint of increasing the discharge capacity per weight of electrode produced with use of the carbonaceous material, the carbonaceous material of the present invention preferably demonstrates a half width of a peak at around 1650 $cm^{-1}$, in a Raman spectrum observed by laser Raman spectrometry, of 98 $cm^{-1}$ or more, more preferably 100 $cm^{-1}$ or more, even more preferably 101 $cm^{-1}$ or more, and yet more preferably 102 $cm^{-1}$ or more. Now, the peak at around 1650 $cm^{-1}$ is a Raman peak usually referred to as the G band, which is a peak caused by disorder/defect in the graphite structure. The peak at around 1650 $cm^{-1}$ is usually observed in the range from 90 $cm^{-1}$ to 120 $cm^{-1}$, and preferably from 100 $cm^{-1}$ to 110 $cm^{-1}$. The Raman spectrum is measured typically with use of a Raman spectrometer, under the conditions described in Examples. The half width of a peak at around 1650 $cm^{-1}$ is adjustable within the aforementioned ranges, typically by controlling a possible amount of addition of the nitrogen-containing compound, and, temperature and time for heat treatment, when preparing the carbonaceous material.

From the viewpoint of further enhancing the current efficiency, and of particularly suppressing decrease in the discharge capacity and improving the current efficiency after repetitive charging-discharging, the oxygen element content, measured by element analysis, of the carbonaceous material of the present invention is preferably less than 1.0% by mass, more preferably 0.8% by mass or less, even more preferably 0.7% by mass or less, yet more preferably 0.6% by mass or less, and furthermore preferably 0.55% by mass or less. The smaller the oxygen element content the better, with a lower limit of 0% by mass or more. The oxygen element content determined by element analysis represents the amount of oxygen element contained in the entire carbonaceous material. With the oxygen element content determined by element analysis suppressed low, the carbonaceous material will have less sites capable of newly reacting with the electrolyte solution or Li after repetitive charging-discharging, particularly will more suppress the discharge capacity from declining after repetitive charging-discharging, and will enhance the total efficiency. The oxygen element content of the carbonaceous material, measured by element analysis, can be lowered by increasing a possible amount of addition of the nitrogen-containing compound, and is also adjustable within the aforementioned ranges by controlling a possible amount of addition of the phosphorus-containing compound, and, temperature and time for heat treatment, when preparing the carbonaceous material.

From the special viewpoint of enhancing the current efficiency, and of suppressing decrease in the discharge capacity and improving the current efficiency after repetitive charging-discharging, the oxygen element content, measured by X-ray photoelectron spectroscopy (XPS), of the carbonaceous material of the present invention is preferably 18.0% by mass or less, more preferably 16.0% by mass or less, even more preferably 15.0% by mass or less, and yet more preferably 14.0% by mass or less.

The oxygen element content analyzed by XPS represents the amount of oxygen element contained in the outermost surface of the carbonaceous material, and corresponds to the amount of functional groups present on the outermost surface. With the oxygen element content suppressed low on the outermost surface, the carbonaceous material will suppress the reaction with the electrolyte solution and Li from the early stage, particularly making it to enhance the current efficiency in the initial charging-discharging. The smaller the oxygen element content measured by XPS analysis the better, with a lower limit of 0% by mass or more. The oxygen element content of the carbonaceous material, measured by XPS analysis, is adjustable within the aforementioned ranges, typically by increasing a possible amount of addition of the nitrogen-containing compound, or also by controlling a possible amount of addition of the phosphorus-containing compound, and, temperature and time for heat treatment, when preparing the carbonaceous material.

In the carbonaceous material of the present invention, from the viewpoint of increasing the electrode density of the negative electrode obtained with use of the carbonaceous material, thereby increasing the discharge capacity per volume as well as the discharge capacity per weight, the carbonaceous material preferably has a true density, when measured by the butanol immersion method, of 1.50 g/cc or more, which is more preferably 1.51 g/cc or more, even more preferably 1.52 g/cc or more, and yet more preferably 1.55 g/cc or more; meanwhile preferably 1.65 g/cc or less, more preferably 1.64 g/cc or less, even more preferably 1.62 g/cc or less, and yet more preferably 1.60 g/cc or less.

In the carbonaceous material of the present invention, from the viewpoint of increasing the electrode density, the carbonaceous material preferably has a tap density of 0.70 g/cc or more, which is more preferably 0.72 g/cc or more, even more preferably 0.75 g/cc or more, yet more preferably 0.78 g/cc or more, and particularly preferably 0.80 g/cc or more. Meanwhile, from the viewpoint of absorbability of electrolyte solution in the process of manufacturing the electrode, the tap density is preferably of 1.0 g/cc or less, more preferably 0.97 g/cc or less, even more preferably 0.95 g/cc or less, yet more preferably 0.93 g/cc or less, and particularly preferably 0.91 g/cc or less. The tap density of the carbonaceous material is measured by freely dropping a cylindrical glass vessel 1.8 cm in diameter, in which the carbonaceous material that passed through a 300 $\mu$m sieve is packed, from a height of 5 cm one hundred times. This set of operation is repeated until the rate of change in density determined from the volume and mass of the carbonaceous material, observed before and after the set of operation, becomes 2% or less.

In the carbonaceous material of the present invention, from the viewpoint of increasing the electrode density, the carbonaceous material preferably demonstrate a $D_{80}/D_{20}$, which represents the ratio of $D_{80}$ to $D_{20}$ in a volume-based particle size distribution measured by laser diffraction scattering particle size analysis, of 3.5 or more, which is more preferably 4.0 or more, even more preferably 4.5 or more, yet more preferably 5.0 or more, particularly preferably 5.5 or more, and again particularly preferably 6.0 or more; meanwhile from the same viewpoint, the ratio is preferably 18 or less, more preferably 16 or less, and even more preferably 15 or less. As to $D_{80}/D_{20}$, the volume based particle size distribution according to the laser diffraction scattering particle size analysis may be measured with a particle size/distribution analyzer that employs a dispersion of the carbonaceous material as a measurement sample, wherein the particle size that gives a cumulative volume of 80% in the size distribution is defined as $D_{80}$, and the particle size that gives a cumulative volume of 20% is defined as $D_{20}$.

In the carbonaceous material of the present invention, from the viewpoint of increasing the electrode density, the carbonaceous material preferably has a circularity, when measured with a flow-type particle image analyzer for particles whose projected area is equal to or more than that of a 5 $\mu$m diameter equivalent circle, of 0.70 or more, which is more preferably 0.71 or more, even more preferably 0.72 or more, and yet more preferably 0.73 or more; meanwhile from the same viewpoint, the circularity is preferably 0.99 or less, more preferably 0.98 or less, and even more preferably 0.96 or less. The circularity is determined as follows. A dispersion of the carbonaceous material is used as a sample for measurement with a flow-type particle image analyzer, to obtain a projected image of the particles. For one particle in the projected image, the circularity is estimated by the following equation: Circularity = $(D/M)^2$, where, D ($\mu$m) is the diameter of an equivalent circle having the same projected area, and M ($\mu$m) is the maximum length of two parallel lines that sandwich the projected image. The circularity is measured typically for 5000 or more particles, and more preferably 10000 or more particles whose D is 5 $\mu$m or more, and obtained measured values are averaged.

The method for producing a carbonaceous material of the present invention is not particularly limited as long as a carbonaceous material having the aforementioned characteristics are obtainable. An exemplary method includes a step of mixing a carbon source compound with a nitrogen-containing compound, heat-treating the obtained mixture in an inert gas atmosphere at 500°C or higher and 900°C or lower, then crushing and/or classifying the product, and further heat-treating the obtained carbonized product at 1200 to 1600°C, wherein, before the heat treatment at 1200 to 1600°C is preceded, the carbonized product is mixed with a phosphorus-containing compound. The carbon source compound, although not particularly limited as long as a carbonaceous material that satisfies the aforementioned characteristics is obtainable, is preferably a sugar skeletal compound, from the viewpoint of adjusting the aforementioned characteristics of the carbonaceous material within the preferred ranges. The carbonaceous material of the present invention is, therefore, preferably a sugar-derived carbonaceous material. A method for producing the carbonaceous material while using the sugar skeletal compound as a carbon source will be explained. In the present specification, the sugar skeletal compound is also referred to as a saccharide compound.

In one preferred embodiment of the present invention, a method for producing a carbonaceous material of the present invention comprises at least:

(1) a step of mixing a sugar skeletal compound with a nitrogen-containing compound to obtain a mixture;
(2) a step of heat-treating the mixture in an inert gas atmosphere at 500 to 900°C to obtain a carbonized product;
(3) a step of crushing and/or classifying the carbonized product; and
(4) a step of heat-treating the thus crushed and/or classified carbonized product in an inert gas atmosphere at 1200 to 1600°C to obtain the carbonaceous material, and the method further comprises:

(a) a step of mixing, prior to the heat treatment in the step (4), the sugar skeletal compound, the mixture that contains the compound, or the carbonized product of the mixture, with a phosphorus-containing compound.

The present invention also provides the method for producing the carbonaceous material.

The present invention also provides a method for producing the carbonaceous material, wherein the step (4) is conducted in presence of a volatile organic substance, or the method further comprises, subsequent to the step (4), a step (5) of further conducting the heat treatment in presence of a volatile organic substance. In a case where the step (4) takes place in presence of a volatile organic substance, or in a case where the step (5) takes place, the heat treatment temperature is adjusted so as to create a condition under which a volatile substance derived from the volatile organic substance during the heat treatment can exist. Although the volatile substance derived from the volatile organic substance presumably adheres on the surface of the carbonaceous material in the step (4) or step (5), the present invention is not limited to such mechanism.

The step (1) is intended for mixing the sugar skeletal compound and the nitrogen-containing compound to obtain a mixture. Examples of the sugar skeletal compound usable as the raw material include monosaccharides such as glucose, galactose, mannose, fructose, ribose, and glucosamine; disaccharides such as sucrose, trehalose, maltose, cellobiose, maltitol, lactobionic acid, and lactosamine; and polysaccharides such as starch, glycogen, agarose, pectin, cellulose, chitin, chitosan, oligosaccharide, and xylitol. The sugar skeletal compound used herein may be any one kind thereof, or combination of two or more kinds thereof. Among these sugar skeletal compounds, starch is preferred for its mass availability. Examples of the starch include corn starch, potato starch, wheat starch, rice starch, tapioca starch, sago starch, sweet potato starch, milo starch, arrowroot starch, bracken-root starch, lotus root starch, green bean starch, and dogtooth violet starch. These starches may be physically, enzymatically, or chemically processed, and may be starches modified into pregelatinized starch, phosphate crosslinked starch, starch acetate, hydroxypropyl starch, oxidized starch, dextrin, or the like. The starch is preferably corn starch, wheat starch, or pregelatinized products of these starches, for their availability and inexpensiveness.

From the viewpoint of increasing the density of the electrode obtained from the carbonaceous material, the sugar skeletal compound used in one preferred embodiment of the production method of the present invention is preferably composed of a compound whose particles preferably contain three or less particles having a void of 1 $\mu m^2$ or more, out of twenty particles having a cross-sectional area of 3 $\mu m^2$ or more and 100 $\mu m^2$ or less which were randomly selected from an electron image observed under a secondary electron microscope, the number of such particles is more preferably two or less, and even more preferably one or less. When preparing the carbonized product with use of such compound having less voids as the raw material, the additional process such as the later-described step (b) is usually unnecessary.

The nitrogen-containing compound employable in the step (1) is not particularly limited as long as it is a compound having a nitrogen atom in the molecule, and examples thereof include inorganic ammonium salts such as ammonium chloride, ammonium sulfate, ammonium carbonate, and ammonium nitrate; organic ammonium salts such as ammonium formate, ammonium acetate, ammonium oxalate, and diammonium hydrogen citrate; aromatic amine hydrochlorides such as aniline hydrochloride and aminonaphthalene hydrochloride; and nitrogen-containing organic compounds such as melamine, pyrimidine, pyridine, pyrrole, imidazole, indole, urea, cyanuric acid, and benzoguanamine. The nitrogen-containing compound used herein may be any one kind thereof, or combination of two or more kinds thereof. Among these nitrogen-containing compounds, those having large content ratio of intramolecular nitrogen are preferred, from the viewpoint of incorporation of large amount of nitrogen element into the carbonaceous material. For example, melamine and urea are preferred. From the viewpoint of reaction with the saccharide compound during the heat treatment process, the nitrogen-containing compound preferably has a volatilization temperature of preferably 100°C or higher, which is more preferably 150°C or higher.

Mixing ratio of the sugar skeletal compound and the nitrogen-containing compound is not particularly limited, and is appropriately adjustable so that the obtainable carbonaceous material will have desired characteristics. For example, increase in the amount of the nitrogen-containing compound tends to increase the nitrogen element content of the carbonaceous material.

In one preferred embodiment of the present invention, the amount of the sugar skeletal compound contained in the mixture obtainable in the step (1) is preferably 50 to 99% by mass relative to the total amount of the sugar skeletal compound and the nitrogen-containing compound, which is more preferably 80 to 95% by mass. Meanwhile, in one preferred embodiment of the present invention, the amount of the nitrogen-containing compound contained in the mixture is preferably 1 to 30% by mass relative to the total amount of the sugar skeletal compound and the nitrogen-containing compound, which is more preferably 3 to 15% by mass. The amount of the nitrogen-containing compound to be mixed in the step (1) is preferably 0.03 to 0.30 mol per mole of the starch monosaccharide unit in the sugar skeletal compound used as the raw material, which is more preferably 0.05 to 0.20 mol, and even more preferably 0.07 to 0.15 mol.

When obtaining the mixture by mixing a carbon precursor and the nitrogen-containing compound in the step (1), at least one crosslinking agent may be further mixed. The crosslinking agent is a compound capable of crosslinking the sugar skeletal compound used as the raw material, and acts as a catalyst that promotes an interchain bond forming reaction of a saccharide compound and/or a reaction between the saccharide compound and the nitrogen-containing compound, which proceeds in parallel with hydrolysis reaction or dehydration reaction of the saccharide compound, or acts by itself as a crosslinker of the saccharide compound and/or the nitrogen-containing compound. The sugar skeletal compound often melts, fuses, or foams in the calcination step, so that the resultant carbonaceous material often has an oblate shape rather than a spherical shape. When calcined with use of the crosslinking agent, the raw materials are more suppressed from fusing or foaming, making it easier to increase the density of the resultant electrode with use of the obtainable carbonaceous material.

Types of the crosslinking agent, when used, is not particularly limited, and examples thereof include aliphatic monocarboxylic acids such as formic acid, acetic acid, propionic acid, butyric acid, valeric acid, caproic acid, heptanoic acid, octanoic acid, nonanoic acid, decanoic acid, undecanoic acid, lauric acid, myristic acid, palmitic acid, stearic acid, linoleic acid, and oleic acid; aromatic monocarboxylic acids such as benzoic acid, salicylic acid, and toluic acid; polycarboxylic acids such as oxalic acid, malonic acid, succinic acid, glutaric acid, adipic acid, fumaric acid, maleic acid, phthalic acid, and terephthalic acid; hydroxycarboxylic acids such as lactic acid, tartaric acid, citric acid, and malic acid; carboxylic acids such as ethylenediaminetetraacetic acid; sulfonic acids such as p-toluenesulfonic acid and methanesulfonic acid; amino acids such as glycine, alanine, valine, leucine, isoleucine, serine, threonine, cysteine, methionine, asparagine, glutamine, proline, phenylalanine, tyrosine, and tryptophan; hydrochloric acid, and sulfuric acid. The crosslinking agent used herein may be any one kind thereof, or combination of two or more kinds thereof. Among these crosslinking agents, polycarboxylic acids and hydroxycarboxylic acids are preferred from the viewpoint of suppressing melting and/or foaming of the raw materials during the step of performing heat treatment and obtaining the carbonized product. Among others, succinic acid, adipic acid, and citric acid are more preferred.

Meanwhile, the amount of the cross-linking agent, when used, is preferably 1 to 30% by mass relative to the total amount of the sugar skeletal compound and the nitrogen-containing compound contained in the mixture, which is more preferably 3 to 10% by mass. Increase in the amount of the crosslinking agent, when used, tends to increase the true density of the carbonaceous material.

Next, in the step (2), the mixture obtained in the step (1) is heat-treated at 500 to 900°C in an inert gas atmosphere to obtain a carbonized product. The heat treatment temperature in the step (2) is preferably 550 to 850°C, and more preferably 600 to 800°C. The rate of heating until reaching the aforementioned heat treatment temperature (reaching temperature) is 50°C/hour or more, and preferably 50°C/hour to 200°C/hour. In the heat treatment, the retention time at the reaching temperature is usually 5 minutes or more, which is preferably 5 minutes to 2 hours, more preferably 10 minutes to 1 hour, and even more preferably 30 minutes to 1 hour. With the heat treatment temperature and the time controlled within the aforementioned ranges, carbonization of the sugar skeletal compound will be more controlled, whereby the characteristics of the carbonaceous material will be adjustable within the desired ranges. The heat treatment temperature, although may be kept constant, is not specifically limited if fallen within the aforementioned ranges. The step (2) is also referred to as a first calcination step.

The step (2) is conducted in an inert gas atmosphere. The inert gas may be intentionally supplied but not necessarily, as long as the step is conducted in the inert gas atmosphere. Examples of the inert gas include argon gas, helium gas, and nitrogen gas. Nitrogen gas is preferred. As a result of such heat treatment step, the carbonized product is obtainable as a precursor of the carbonaceous material.

In the step (3), the obtained carbonized product is crushed and/or classified. Methods of crushing and classification may typically rely upon methods with use of a ball mill or a jet mill, without special limitation. The crushing and/or classification of the carbonized product can crack or remove the aggregate produced by the heat treatment in the step (2).

In the step (4), the carbonized product having been crushed and/or classified is heat-treated at 1200 to 1600°C in an inert gas atmosphere, to obtain the carbonaceous material of the present invention. The heat treatment temperature in the step (4) is preferably 1200 to 1400°C, more preferably 1210 to 1400°C, even more preferably 1230 to 1350°C, and yet more preferably 1250 to 1300°C. In the present specification, the heat treatment at 1200 to 1600°C means that a temperature of 1200 to 1600°C is kept for 1 minute or more. The rate of heating until reaching the aforementioned heat treatment temperature (reaching temperature) is 50°C/hour or more, and preferably 50°C/hour to 200°C/hour. In the heat treatment, the retention time at the reaching temperature is 1 minute or more, which is preferably 5 minutes to 2 hours, more preferably 10 minutes to 1 hour, and even more preferably 10 minutes to 30 minutes. With the heat treatment temperature and the time controlled within the aforementioned ranges, the characteristics of the finally obtainable carbonaceous material will be adjustable within the desired ranges. The heat treatment temperature, although may be kept constant, is not specifically limited if fallen within the aforementioned ranges. The step (4) is also referred to as a second calcination step.

The production method of the present invention includes the step (a) of mixing the sugar skeletal compound, the mixture that contains the compound, or the carbonized product of the mixture, with the phosphorus-containing compound, prior to the heat treatment at 1200 to 1600°C in the step (4). By producing the carbonaceous material by the production method that includes the step (a), the carbonaceous material will have phosphorus element contained therein. In the carbonaceous material, with the amounts of nitrogen element and phosphorus element controlled to predetermined levels, and with the hydrogen element content adjusted within a predetermined range, it now becomes possible to provide the carbonaceous material that can demonstrate large discharge capacity per weight and high current efficiency, and is suitable for a power storage device capable of maintaining a high discharge capacity even after repetitive charging-discharging, although the reason why remains unclear.

The step (a) may be conducted by mixing the sugar skeletal compound and the phosphorus-containing compound used in the step (1); may be conducted, when mixing the sugar skeletal compound and the nitrogen-containing compound to obtain the mixture in the step (1), by mixing the phosphorus-containing compound together therewith; may be conducted by mixing the mixture obtained in the step (1) with the phosphorus-containing compound; may be conducted by mixing the carbonized product obtained in the step (2) with the phosphorus-containing compound; or may be conducted by mixing the crushed and/or classified carbonized product obtained in the step (3) with the phosphorus-containing compound.

The phosphorus-containing compound employable in the step (a) is not particularly limited as long as it is a compound having a phosphorus atom in the molecule, and examples thereof include inorganic phosphoric acid, organic phosphoric acid, salts thereof, organic phosphorus, and phosphonium salts. The phosphorus-containing compound used herein may be any one kind thereof, or combination of two or more kinds thereof.

Examples of the inorganic phosphoric acid include phosphoric acid, dihydrogen phosphate, ammonium dihydrogen phosphate, primary phosphate, secondary phosphate, tertiary phosphate, pyrophosphoric acid, pyrophosphate, tripolyphosphoric acid, tripolyphosphate, phosphorous acid, phosphite, hypophosphorous acid, hypophosphite, and diphosphorus pentoxide. Examples of the organic phosphoric acid include phosphonic acid (phosphonic acid compound), and examples of the phosphonic acid include nitrilotrismethylenephosphonic acid, phosphonobutanetricarboxylic acid, methyldiphosphonic acid, methylenephosphonic acid, ethylidenediphosphonic acid, and triphenyl phosphate. When these phosphoric acids are in the form of salt, the salt may typically be alkali metal salt and/or alkaline earth metal salt, or ammonium salt. Examples of the organic phosphorus include triphenylphosphine, triphenylphosphine oxide, tricyclohexylphosphine, tricyclohexylphosphine oxide, trialkylphosphine, and trialkylphosphine oxide. Examples of the phosphonium salt include tetraalkylphosphonium salt and tetraphenylphosphonium salt. These salts may typically be halide, sulfate, phosphate, or acetate. Among these phosphorus-containing compounds, phosphoric acid and ammonium dihydrogen phosphate having high phosphorus content in the molecule are preferred, from the viewpoint of easiness of incorporation of large amount of phosphorus element into the carbonaceous material. From the viewpoint of reaction with the saccharide compound during the heat treatment process, the phosphorus-containing compound preferably has a volatilization temperature of preferably 100°C or higher, which is more preferably 150°C or higher.

Also the method for mixing the phosphorus-containing compound in the step (a) is not particularly limited. If the phosphorus-containing compound is in a solid form, such solid phosphorus-containing compound may be mixed typically with the sugar skeletal compound. Meanwhile, if the phosphorus-containing compound is in a water-soluble form, an aqueous solution of the phosphorus-containing compound may be mixed typically with the sugar skeletal compound.

The amount of the phosphorus-containing compound to be mixed in the step (a) is not particularly limited, as long as the finally obtainable carbonaceous material will have the phosphorus element content fallen within the aforementioned ranges, and may be preferably adjusted to 0.5 to 10% by mass, and more preferably 0.6 to 8% by mass, typically on the basis of the total amount of the sugar skeletal compound and the nitrogen-containing compound, or on the basis of the amount of the carbonized product obtained in the step (2). The amount of the phosphorus-containing compound to be mixed in the step (a) is preferably 0.001 to 0.20 moles per mole of the starch monosaccharide unit in the sugar skeletal compound used as the raw material, which is more preferably 0.005 to 0.15 moles, and even more preferably 0.01 to 0.10 moles.

In the step (4), a volatile organic substance may be added to the crushed and/or classified carbonized product obtained in the step (3), and the resultant mixture may be subjected to the step (4). The volatile organic substance is referred to as an organic compound that hardly carbonizes (for example, 80% or more, preferably 90% or more remain uncarbonized), but vaporizes (gasifies or thermally decomposes to produce a gas), in the process of heat treatment (typically at 500°C or higher) in an atmosphere of an inert gas such as nitrogen. The volatile organic substance is not particularly limited, and examples thereof include thermoplastic resin and low molecular weight organic compounds. Specific examples of the thermoplastic resin include polystyrene, polyethylene, polypropylene, poly(meth)acrylic acid, and poly(meth)acrylate ester. In this specification, (meth)acryl is a collective term for methacryl and acryl. The volatile organic substance may alternatively be a resin that partially contains the thermoplastic resin, such as a copolymer, and examples of such resin include acrylonitrile-chlorinated polyethylene-styrene copolymer (ACS resin), acrylonitrile-acrylate ester-styrene copolymer (AAS resin), acrylonitrile-ethylene-styrene copolymer (AES resin), styrene-ethylene-propylene-styrene block copolymer (SEPS resin), styrene-ethylene-butylene-styrene block copolymer (SEBS resin), styrene-isoprene-styrene block copolymer (SIS resin), styrene-butadiene-styrene block copolymer (SBS resin), acrylonitrile-styrene copolymer (AS resin), and acrylonitrile-butadiene-styrene copolymer (ABS resin). Examples of the low molecular weight organic compound include ethylene, propane, hexane, toluene, xylene, mesitylene, styrene, naphthalene, phenanthrene, anthracene, and pyrene. Since the thermoplastic resin is preferred to vaporize at the calcination temperature, and not to oxidatively activate the surface of the carbon precursor if thermally decomposed, so that preferred examples of the thermoplastic resin include polystyrene, polyethylene, polypropylene, and poly(meth)acrylic acid. From the additional viewpoint of safety, the low molecular weight organic compound preferably has low volatility at normal temperature (20°C, for example), for which naphthalene, phenanthrene, anthracene, pyrene, and the like are preferred. Addition of such volatile organic substance is preferred since the hydrogen element content, oxygen element content and specific surface area can be further reduced, while maintaining the unique structure of the present invention.

Alternatively, the volatile organic substance may be gasified, mixed with an inert gas such as nitrogen, and then fed to the step (4). The volatile organic substance is not particularly limited, and examples thereof include low molecular weight organic compound. Examples of the low molecular weight organic compound include ethylene, propane, hexane, toluene, xylene, mesitylene, styrene, naphthalene, phenanthrene, anthracene, and pyrene. From the viewpoint of miscibility with an inert gas such as nitrogen, the low molecular weight organic compound preferably has high volatility. Preferred examples include ethylene, propane, hexane, and toluene. Addition of such volatile organic substance is preferred since the hydrogen element content, oxygen element content and specific surface area can be further reduced, while maintaining the unique structure of the present invention.

The volatile organic substance, when thus added in the step (4), presumably inactivates radical active sites or the like, on the surface of the particle of the carbonaceous material. Such radical active sites usually react with oxygen in the air, to increase the oxygen element content of the carbonaceous material. With the oxygen element content, especially the oxygen element content determined by XPS, suppressed low in one preferred embodiment of the present invention, the carbonaceous material presumably has less number of radical reaction sites or the like on the surface thereof, and thus becomes less susceptible to oxidation, thereby reducing the sites capable of serving as the reaction sites during repetitive charging-discharging. It is therefore presumed that the carbonaceous material, with the radical active sites further inactivated with the volatile organic substance, will maintain the discharge capacity at higher levels, even after repetitive charging-discharging.

The step (4) may alternatively be followed by the step (5) further conducting the heat treatment in presence of the volatile organic substance. The step (5), when employed, can presumably further reduce the radical active sites and the like on the surfaces of the particle of the carbonaceous material, while maintaining the carbon structure obtained in the step (4). The heat treatment temperature in the step (5) is preferably lower than 1200°C, more preferably 700°C and higher and lower than 1200°C, even more preferably 750 to 1100°C, and yet more preferably 800 to 1000°C. From the viewpoint of maintaining the carbon structure obtained in the step (4), and of obtaining high discharge capacity, the heat treatment temperature in the step (5) is preferably controlled to the aforementioned upper limit or less. From the additional viewpoint of sufficiently decomposing the volatile organic substance and of inactivating the radical active sites of the carbonaceous material, the heat treatment temperature in the step (5) is preferably adjusted to the aforementioned lower limit or more. In the heat treatment in the step (5), the retention time at the reaching temperature is preferably 1 minute to 1 hour, and more preferably 10 minutes to 40 minutes. With the heat treatment temperature and the time controlled within the aforementioned ranges, the carbonaceous material will presumably further reduce the radical active sites, and will maintain the discharge capacity at higher levels, even after repetitive charging-discharging.

When producing the carbonaceous material by the aforementioned production method, the production method may further include a step (b) of gelatinizing the sugar skeletal compound, in addition to the steps (1) to (4) or to the steps (1) to (5), prior to the step (1), concurrently with the step (1), or subsequent to the step (1) of mixing the sugar skeletal compound with the nitrogen-containing compound to obtain the mixture. When further employing the step (b), the sugar skeletal compound used as the raw material will have the voids closed, thus making it easier to increase the density of an electrode formed of the finally obtainable carbonaceous material, and to increase the discharge capacity per volume.

When employing the step (b), the method of gelatinization is not particularly limited, and examples thereof include a method of heating the sugar skeletal compound alone or in any mixed form typically with the nitrogen-containing compound in presence of water; or, a method of subjecting the sugar skeletal compound alone or in any mixed form typically with the nitrogen-containing compound, to a mechanical process that exerts an action of impact, crushing, friction, and/or shearing. Application of such heat or external force closes the cavity contained in the sugar skeletal compound. The gelatinization in the step (b) is preferably conducted for example, until the sugar skeletal compound will contain a predetermined number or less of particles having a void of 1 $\mu m^2$ or more, out of twenty particles having a cross-sectional area of 3 $\mu m^2$ or more and 100 $\mu m^2$ or less which were randomly selected from an electron image observed under a secondary electron microscope, the number of such particles is preferably three or less, more preferably two or less, and even more preferably one or less. The microscopic observation may follow crushing or classification of any aggregate possibly contained in the gelatinized compound. When employing the step (b), the mixture thus obtained through the step (1) and the optional step (b) is heat-treated in the step (2). The step (b), when employed, is therefore a step that precedes the step (2).

In one preferred mode of the present invention, the production method of the present invention may include the following steps as the step (b):

a step (b1) of mixing, prior to the step (1), the sugar skeletal compound with 5 to 50% by mass, relative to the mass of the compound, of water, and heating the mixture at 50 to 200°C for 1 minute to 5 hours;

a step (c1) of subjecting, prior to the step (1), the sugar skeletal compound to a mechanical process that exerts an action of impact, crushing, friction, and/or shearing;

a step (b2) of mixing, concurrently with or subsequent to the step (1), the mixture that contains the sugar skeletal compound, with 5 to 50% by mass, relative to the mass of the sugar skeletal compound, of water, and heating the mixture at 50 to 200°C for 1 minute to 5 hours; and/or

a step (c2) of subjecting, concurrently with or subsequent to the step (1), the mixture that contains the sugar skeletal compound to a mechanical process that exerts an action of impact, crushing, friction, and/or shearing.

The step (b 1) is a step of mixing, prior to the step (1), the sugar skeletal compound with 5 to 50% by mass, relative to the mass of the compound, of water, and heating the mixture at 50 to 200°C for 1 minute to 5 hours. The amount of water to be mixed with the sugar skeletal compound is required to be a certain amount or more, but is the smaller the better, from the viewpoint of saving energy required for distilling off the mixed water in the process of producing the carbonaceous material. The amount of water relative to the mass of the compound is therefore 5 to 50% by mass, preferably 10 to 50% by mass, and even more preferably 10 to 30% by mass. The heating temperature is preferably 50 to 200°C, preferably 60 to 180°C, and even more preferably 80 to 180°C. Furthermore, the heating time is 1 minute to 5 hours, preferably 3 minutes to 1 hour, and more preferably 10 minutes to 30 minutes.

The step (c1) is a step of subjecting, prior to the step (1), the sugar skeletal compound to a mechanical process that exerts an action of impact, crushing, friction, and/or shearing. Examples of an apparatus used in the mechanical process that exerts an action of impact, crushing, friction, and/or shearing include crusher, extruder, mill, grinder, and kneader. Process conditions such as the treatment time are not particularly limited, and are typified by 20 Hz and 10 minutes, for an exemplary case with use of a vibratory ball mill.

The step (b2) is a step of mixing, concurrently with or subsequent to the step (1), the mixture that contains the sugar skeletal compound, with 5 to 50% by mass, relative to the mass of the sugar skeletal compound, of water, and heating the mixture at 50 to 200°C for 1 minute to 5 hours, to which the description on the preferred mode or the like for the step (b 1) similarly applies.

The step (c2) is a step of subjecting, concurrently with or subsequent to the step (1), the mixture that contains the sugar skeletal compound to a mechanical process that exerts an action of impact, crushing, friction, and/or shearing, to which the description on the preferred mode or the like for the step (c1) similarly applies.

The carbonaceous material of the present invention, or the carbonaceous material obtained by the production method of the present invention are suitably applicable to an active material of a negative electrode for a power storage device.

Hereinafter, a method for producing a negative electrode for a power storage device with use of the carbonaceous material of the present invention will be specifically described. When manufacturing the negative electrode, for example, a binder is added to the carbonaceous material, an appropriate amount of a solvent is added thereto, and the mixture is then kneaded to prepare an electrode mixture. The obtained electrode mixture is applied to a current collector plate typically made of a metal plate, dried, and then pressure-molded, thereby manufacturing a negative electrode of a power storage device, which is specifically a negative electrode for nonaqueous electrolyte secondary battery such as lithium ion secondary battery, sodium ion battery, lithium sulfur battery, or lithium air battery.

Use of the carbonaceous material of the present invention enables manufacture of the electrode (negative electrode) which can demonstrate large discharge capacity per weight and high current efficiency, and can maintain high discharge capacity even after repetitive charging-discharging. For the electrode expected for higher level of conductivity, a conductive aid may optionally be added when preparing the electrode mixture. Examples of the conductive aid applicable herein include carbon black, vapor grown carbon fiber (VGCF), and nanotube. Amount of addition of the conductive aid varies depending on the type of the conduction aid to be used, where too small amount of addition would fail in obtaining desired conductivity, meanwhile too much amount would degrade dispersibility in the electrode mixture. From these points of view, the amount of addition of the conductive aid, when added, is preferably 0.5 to 10% by mass%, relative to 100% by mass in total of the amount of the active material (carbonaceous material) and the amount of the binder, which is more preferably 0.5 to 7% by mass, and even more preferably 0.5 to 5% by mass. The binder is not particularly limited as long as it does not react with the electrolytic solution, and examples thereof include PVDF (polyvinylidene fluoride), polytetrafluoroethylene, and mixture of SBR (styrene-butadiene rubber) and CMC (carboxymethyl cellulose). Among others, the mixture of SBR and CMC is preferred, since SBR and CMC, adhered to the surface of the active material are less likely to inhibit the lithium ion transfer, thereby ensuring good input/output characteristic. SBR or the like, in the form of aqueous emulsion, or CMC may be dissolved to form a slurry by preferably using a polar solvent such as water, or, soluble emulsion such as PVDF may be used after dissolved typically in N-methylpyrrolidone. Too large amount of addition of the binder would increase the resistance of the obtainable electrode, thereby possibly increasing the internal resistance of the battery, and degrading the battery characteristics. Meanwhile, too small amount of addition of the binder would result in insufficient bonding of the negative electrode material, among the particles thereof, or between the negative electrode material and the current collector material. A preferred amount of addition of the binder varies depending on the type of binder to be used. For example, a binder that uses water as the solvent often relies upon mixed use of a plurality of binders, such as a mixture of SBR and CMC, with the total amount of all binders to be used preferably adjusted to 0.5 to 5% by mass, and more preferably to 1 to 4% by mass. On the other hand, the amount of addition of the PVDF-based binder is preferably 3 to 13% by mass, and more preferably 3 to 10% by mass. Content of the carbonaceous material in the electrode mixture is preferably 80% by mass or more, and more preferably 90% by mass or more. Meanwhile, the content of the carbonaceous material in the electrode mixture is preferably 100% by mass or less, and more preferably 97% by mass or less.

An electrode active material layer, basically formed on both surfaces of the current collector plate, may alternatively be formed on one surface as necessary. The thicker the electrode active material layer, the lesser the current collecting plate, separator, or the like, which is advantageous for increase in the capacity. However, the larger the electrode area opposed to the counter electrode, the more advantageous the improvement of the input/output characteristics, so that too thick electrode active material layer would degrade the input/output characteristics. From the viewpoint of output during discharge of the battery, the thickness (per side) of the active material layer is preferably 10 to 80 $\mu$m, more preferably 20 to 75 $\mu$m, and even more preferably 30 to 75 $\mu$m.

The power storage device with use of the carbonaceous material of the present invention can demonstrate large discharge capacity per weight and high current efficiency, and can maintain high discharge capacity even after repetitive charging-discharging. When forming the negative electrode for the power storage device with use of the carbonaceous material of the present invention, other materials that constitute the battery, such as a positive electrode material, separator and electrolytic solution, may be any of various materials having been used or proposed for the power storage device.

For example, the positive electrode material is preferably composite metal chalcogen compounds, such as layered oxide-type (represented by $LiMO_2$, where M represents a metal: such as $LiCoO_2$, $LiNiO_2$, $LiMnO_2$, or represented by $LiNi_xCo_yMo_zO_2$ (where, x, y, and z represent composition ratios)); olivine-type (represented by $LiMPO_4$, where M represents a metal: such as $LiFePO_4$); and spinel-type (represented by $LiM_2O_4$, where M represents a metal: such as $LiMn_2O_4$). These chalcogen compounds may be mixed for use as necessary. These positive electrode materials are molded together with an appropriate binder and a carbon material that makes the electrode conductive, and then layered on a conductive current collector material, to form a positive electrode.

In an exemplary case where the power storage device is a nonaqueous electrolyte secondary battery, the nonaqueous solvent electrolytic solution is usually prepared by dissolving an electrolyte in a nonaqueous solvent. The nonaqueous solvent employable herein may be one kind, or two or more kinds selected, for example, from organic solvents such as propylene carbonate, ethylene carbonate, dimethyl carbonate, diethyl carbonate, dimethoxyethane, diethoxyethane, $\gamma$-butyrolactone, tetrahydrofuran, 2-methyltetrahydrofuran, sulfolane, or 1,3-dioxolane. Meanwhile, the electrolyte employable herein includes $LiClO_4$, $LiPF_6$, $LiBF_4$, $LiCF_3SO_3$, $LiAsF_6$, LiCl, LiBr, $LiB(C_6H_5)_4$, and $LiN(SO_3CF_3)_2$.

When the power storage device is given in a form of nonaqueous electrolyte secondary battery, the nonaqueous electrolyte secondary battery is usually formed by arranging the positive electrode and the negative electrode opposed while optionally placing a liquid permeable separator in between, and by immersing them in an electrolytic solution. The separator employable here may be a permeable or liquid-permeable separator made of a nonwoven fabric or other porous material usually used for secondary battery. Alternatively, in place of or together with the separator, employable is a solid electrolyte composed of a polymer gel impregnated with an electrolytic solution.

The carbonaceous material of the present invention is suitable typically as a carbonaceous material for a power storage device (typically, a nonaqueous electrolyte secondary battery for vehicle driving) mounted on vehicle such as automobile. The vehicle in the context of the present invention may encompass, without special limitation, any of those known as electric vehicle, or hybrid vehicle that relies upon fuel cell and internal combustion engine, and includes at least a power supply unit that has such battery, an electric drive mechanism driven by power supplied from such power supply unit, and a control device that controls the mechanism. The vehicle may be further equipped with a dynamic brake and a regenerative brake, as a mechanism for converting braking energy into electricity to be charged in the nonaqueous electrolyte secondary battery.

EXAMPLES

The present invention will be specifically described below, with reference to Examples, by which the scope of the present invention is not limited. Methods for measuring physical properties of the carbonaceous material and the negative electrode with use thereof will be described below. Note that, all physical properties and measurements (or, physical property values and measured values) described in the present specification, including Examples, are based on values determined by the following methods.

(Contents of Hydrogen Element, Oxygen Element and Nitrogen Element)

Element analysis was conducted according to the inert gas fusion method, with use of an oxygen/nitrogen/hydrogen analyzer EMGA-930 from HORIBA, Ltd.

The detection method with this apparatus relies upon inert gas fusion-non-dispersive infrared absorption method (NDIR) for oxygen; nitrogen: inert gas fusion-thermal conduction method (TCD) for nitrogen; and inert gas fusion-non-dispersive infrared absorption method (NDIR) for hydrogen. Calibration was conducted with use of (oxygen/nitrogen) Ni capsule, $TiH_2$ (H standard sample), SS-3 (O standard sample), and SiN (N standard sample). The measurement was preceded by pretreatment in which 20 mg of a sample was kept at 250°C for approximately 10 minutes to measure the water content, placed in the Ni capsule, and degassed for 30 seconds in the element analyzer. Three samples were used for each analysis, and the average value was employed as the analytical value. The contents of hydrogen element, oxygen element, and nitrogen element in the sample were thus determined.

(Phosphorus Element Content)

The phosphorus element content was analyzed according to X-ray fluorescence analysis, with use of ZSX Primus-$\mu$ from Rigaku Corporation.

With use of a holder adapted to the tube-upper configuration, the sample was measured within an area 30 mm in diameter. In a mortar, 2.0 g of the sample to be measured and 2.0 g of a polymer binder (Spectro Blend 44$\mu$ Powder, from Chemplex) were mixed, and placed into a molding machine. A 15-ton load was applied to the molding machine for 1 minute, to prepare a pellet 40 mm in diameter. The prepared pellet was wrapped with a polypropylene film, placed on a sample holder, and measured. The X-ray source was set to 30 kV and 100 mA. With use of Ge(111) as an analyzing crystal, and a gas flow-type proportional proportional counter as a detector, the sample was measured within the 2θ range from 137 to 144° at a scanning speed of 4°/min, so as to find the phosphorus element content from the intensity of phosphorus K$\alpha$ ray.

(Measurement of Average Interplanar Spacing $d_{002}$ With Use of Bragg Equation in X-Ray Diffractometry)

With use of "MiniFlexII from Rigaku Corporation", powder of each of the carbonaceous materials prepared in Examples and Comparative Examples described later was packed in a sample holder, and an X-ray diffraction pattern was obtained while irradiated by CuK$\alpha$ ray, as a radiation source, monochromatized through a Ni filter. The peak position in the diffraction pattern was determined by the centroid method (a method of finding a centroid position of a diffraction line, and finding a peak position in terms of 2θ value that corresponds to the position), and was corrected with use of a diffraction peak from the (111) plane of the high-purity silicon powder as a standard substance. Letting the wavelength $\lambda$ of the CuKa ray be 0.15418 nm, $d_{002}$ was estimated from the Bragg equation below.

[Mathematical Formula 1]

$$d_{002} = \frac{\lambda}{2 \cdot \sin \theta} \quad \text{(Bragg Equation)}$$

(Particle Size Distribution Determined by Laser Scattering)

Average particle size (particle size distribution) of the carbonized product was measured by the following method. Into 2 mL aqueous solution that contains 5% by mass of a surfactant ("Toriton X100" from Wako Pure Chemical Industries, Ltd.), 5 mg of each sample was added, and sonicated with an ultrasonic cleaner for 10 minutes or more, to be dispersed in the aqueous solution. The dispersion was used to measure the particle size distribution. The particle size distribution was measured with use of a particle size/distribution analyzer ("Microtrac MT3300 EXII", from Micro-tracBEL Corp.). $D_{50}$, a particle size which gives a cumulative volume of 50%, was employed as an average particle size.

(Raman Spectrum)

With use of a Raman spectrometer ("Laser Raman Microscope Ramanforce", from Nanophoton Corporation), each carbonaceous material, as a particle to be measured, is set on an observation stage, a magnification power of an objective lens was set to 20×, focused, and the spectrum was measured under irradiation of argon ion laser light. Measurement conditions are detailed below. From the obtained Raman spectrum, the half width of the peak at around

1360 cm$^{-1}$, and the half width of the peak at around 1650 cm$^{-1}$ were determined.

Wavelength of argon ion laser light: 532 nm
Laser power on sample: 100-300 W/cm$^2$
Resolution: 5-7 cm$^{-1}$
Measurement range: 150-4000 cm$^{-1}$
Measurement mode: XY Averaging
Exposure time: 20 seconds
Number of integrations: twice
Peak intensity measurement: Baseline correction: automatically corrected according to polynomial up to the third degree
Peak search & fitting: GaussLoren

(XPS Spectrum)

Peaks derived from C1s, P2p, O1s, and N1s of each carbonaceous material were observed with use of a scanning X-ray photoelectron spectrometer ("PHI Quantera SXM", from ULVAC-PHI, Inc.), and an element composition ratio was confirmed. Detailed measurement conditions are as follows.

X-ray source: Monochromatized Al K$\alpha$ (1486.6 eV)
X-ray beam diameter: 200 $\mu$m$\phi$ (50 W, 15 kV)
Measurement range: 1000 $\mu$m wide $\times$ 300 $\mu$m long
Signal capture angle: 45°
Charge neutralization condition: Neutralization electron gun, Ar$^+$ ion gun
Pressure: 1 $\times$ 10$^{-6}$ Pa
Method of Measurement: Normal

(Example 1)

In a sample bottle, 100 parts by mass of starch (corn starch), 11.6 parts by mass of melamine (0.15 moles per mole of starch monosaccharide unit), 7.6 parts by mass of adipic acid (0.08 moles per mole of starch monosaccharide unit), and 4 parts by mass of ammonium dihydrogen phosphate (0.06 moles per mole of starch monosaccharide unit) were placed, and the content was shaken to obtain a mixture (step 1 and step a). The obtained mixture was heated to 600°C in a nitrogen gas atmosphere. Heating rate up to 600°C in this process was adjusted to 600°C/hour (10°C/min). Next, the mixture was carbonized by heat-treatment at 600°C for 30 minutes under a nitrogen gas flow, to obtain a carbonized product (step 2). Amount of feeding of nitrogen gas in this process was adjusted to 0.5 L/min per 10 g of starch. The obtained carbonized product was halved, and crushed with use of a ball mill under different conditions, to obtain a crushed carbonized product with a D$_{50}$ of 9 $\mu$m, and a crushed carbonized product with a D$_{50}$ of 2 $\mu$m (step 3). Next, the crushed carbonized product with a D$_{50}$ of 9 $\mu$m, the crushed carbonized product with a D$_{50}$ of 2 $\mu$m, and polystyrene (from Sekisui Kasei Co., Ltd., average particle size: 400 $\mu$m) were placed in a 100 ml container, while adjusting the ratio by mass to 1:2:0.3, and the content was mixed by shaking at 2 Hz for 5 minutes. The obtained mixture was heated up to 1250°C, and subjected to high temperature calcination at 1250°C for 30 minutes, to obtain a carbonaceous material (step 4). Heating rate up to 1250°C in this process was adjusted to 600°C/hour (10°C/min). The heating and the heat treatment were conducted under a nitrogen gas flow. Rate of feeding of nitrogen gas was adjusted to 3 L/min per 5 g of the crushed carbonized product.

(Example 2)

The steps 1 to 3 and the step a were conducted in the same manner as in Example 1, to obtain a crushed carbonized product with a D$_{50}$ of 9 $\mu$m and a crushed carbonized product with a D$_{50}$ of 2 $\mu$m. The step 4 was conducted in the same manner as in Example 1, except that ABS resin (from Sekisui Kasei Co., Ltd., average particle size: 100 $\mu$m), in place of polystyrene, was mixed with the obtained crushed carbonized product, to obtain a carbonaceous material.

(Example 3)

The steps 1 to 3 and the step a were conducted in the same manner as in Example 1, to obtain a crushed carbonized product with a D$_{50}$ of 9 $\mu$m and a crushed carbonized product with a D$_{50}$ of 2 $\mu$m. The step 4 was conducted in the same manner as in Example 1, except that polymethyl methacrylate (PMMA, from Kuraray Co., Ltd., average

particle size: 300 $\mu$m), in place of polystyrene, was mixed with the obtained crushed carbonized product, to obtain a carbonaceous material.

(Example 4)

The steps 1 to 3 and the step a were conducted in the same manner as in Example 1, to obtain a crushed carbonized product with a $D_{50}$ of 9 $\mu$m and a crushed carbonized product with a $D_{50}$ of 2 $\mu$m. Next, the crushed carbonized product with a $D_{50}$ of 9 $\mu$m, the crushed carbonized product with a $D_{50}$ of 2 $\mu$m, and polystyrene were placed in a 100 ml container, while adjusting the ratio by mass to 1:2:0.3, and the content was mixed by shaking at 2 Hz for 5 minutes. The obtained mixture was heated up to 1280°C, and subjected to high temperature calcination at 1280°C for 11.25 minutes, to obtain a carbonaceous material (step 4). Heating rate up to 1280°C in this process was adjusted to 600°C/hour (10°C/min). The heating and the heat treatment were conducted under a nitrogen gas flow. Rate of feeding of nitrogen gas was adjusted to 3 L/min per 5 g of the crushed carbonized product.

(Example 5)

The steps 1 to 3 and the step a were conducted in the same manner as in Example 1, to obtain a crushed carbonized product with a $D_{50}$ of 9 $\mu$m and a crushed carbonized product with a $D_{50}$ of 2 $\mu$m. Next, the crushed carbonized product with a $D_{50}$ of 9 $\mu$m, and the crushed carbonized product with a $D_{50}$ of 2 $\mu$m were placed in a 100 ml container, while adjusting the ratio by mass to 1:2, and the content was mixed by shaking at 2 Hz for 5 minutes. The obtained mixture was heated up to 1250°C, and subjected to high temperature calcination at 1250°C for 30 minutes. The mixture was then cooled down to 800°C, to which a gasified volatile organic substance (hexane) was supplied at a concentration of 0.5 vol% at 800°C for 30 minutes, to obtain a carbonaceous material (step 4). Each of heating rate up to 1250°C and cooling rate down to 800°C in this process was adjusted to 600°C/hour (10°C/min). The heating, the cooling, and the heat treatment were conducted under a nitrogen gas flow. Rate of feeding of nitrogen gas was adjusted to 3 L/min per 5 g of the crushed carbonized product.

(Example 6)

The steps 1 to 3 and the step a were conducted in the same manner as in Example 1, to obtain a crushed carbonized product with a $D_{50}$ of 9 $\mu$m and a crushed carbonized product with a $D_{50}$ of 2 $\mu$m. Next, the crushed carbonized product with a $D_{50}$ of 9 $\mu$m, and the crushed carbonized product with a $D_{50}$ of 2 $\mu$m were placed in a 100 ml container, while adjusting the ratio by mass to 1:2, and the content was mixed by shaking at 2 Hz for 5 minutes. The obtained mixture was heated up to 1250°C, and subjected to high temperature calcination at 1250°C for 30 minutes. The mixture was then cooled down to 900°C, to which a gasified volatile organic substance (hexane) was supplied at a concentration of 0.5 vol% at 900°C for 30 minutes, to obtain a carbonaceous material (step 4). Each of heating rate up to 1250°C and cooling rate down to 900°C in this process was adjusted to 600°C/hour (10°C/min). The heating, the cooling, and the heat treatment were conducted under a nitrogen gas flow. Rate of feeding of nitrogen gas was adjusted to 3 L/min per 5 g of the crushed carbonized product.

(Example 7)

In a sample bottle, 100 parts by mass of starch (corn starch), 11.6 parts by mass of melamine (0.15 moles per mole of starch monosaccharide unit), 7.6 parts by mass of adipic acid (0.08 moles per mole of starch monosaccharide unit), and 6 parts by mass of ammonium dihydrogen phosphate (0.08 moles per mole of starch monosaccharide unit) were placed, and the content was shaken to obtain a mixture (step 1 and step a). The obtained mixture was heated to 600°C in a nitrogen gas atmosphere. Heating rate up to 600°C in this process was adjusted to 600°C/hour (10°C/min). Next, the mixture was carbonized by heat-treatment at 600°C for 30 minutes under a nitrogen gas flow, to obtain a carbonized product (step 2). Amount of feeding of nitrogen gas in this process was adjusted to 0.5 L/min per 10 g of starch. The obtained carbonized product was halved, and crushed with use of a ball mill under different conditions, to obtain a crushed carbonized product with a $D_{50}$ of 9 $\mu$m, and a crushed carbonized product with a $D_{50}$ of 2 $\mu$m (step 3). Next, the crushed carbonized product with a $D_{50}$ of 9 $\mu$m, and the crushed carbonized product with a $D_{50}$ of 2 $\mu$m were placed in a 100 ml container, while adjusting the ratio by mass to 1:2, and the content was mixed by shaking at 2 Hz for 5 minutes. The obtained mixture was heated up to 1250°C, and subjected to high temperature calcination at 1250°C for 10 minutes. The mixture was then cooled down to 900°C, to which a gasified volatile organic substance (hexane) was supplied at a concentration of 0.5 vol% at 900°C for 30 minutes, to obtain a carbonaceous material (step 4). Each of heating rate up to 1250°C and cooling rate down to 900°C in this process was adjusted to 600°C/hour (10°C/min). The heating, the cooling, and the heat treatment were conducted under a nitrogen gas flow. Rate of feeding of nitrogen gas was adjusted to 3 L/min per 5 g of the crushed carbonized product.

(Example 8)

A carbonaceous material was obtained in the same manner as in Example 5, except that the step 4 in Example 5 was conducted while supplying propane, in place of hexane, for a high temperature heat treatment step, which was followed by heating at 800°C for 30 minutes.

(Example 9)

The steps 1 to 3 and the step a were conducted in the same manner as in Example 1, to obtain a crushed carbonized product with a $D_{50}$ of 9 $\mu$m and a crushed carbonized product with a $D_{50}$ of 2 $\mu$m (Step 3). Next, the crushed carbonized product with a $D_{50}$ of 9 $\mu$m, and the crushed carbonized product with a $D_{50}$ of 2 $\mu$m were placed in a 100 ml container, while adjusting the ratio by mass to 1:2, and the content was mixed by shaking at 2 Hz for 5 minutes. The obtained mixture was heated up to 1250°C, and subjected to high temperature calcination at 1250°C for 30 minutes, to obtain a carbonaceous material (step 4). Heating rate up to 1250°C in this process was adjusted to 600°C/hour (10°C/min). The heating and the heat treatment were conducted under a nitrogen gas flow. Rate of feeding of nitrogen gas was adjusted to 3 L/min per 5 g of the crushed carbonized product.

(Example 10)

A carbonaceous material was obtained in the same manner as in Example 9, except that the heat treatment in the step 4 of Example 9 was conducted at 1250°C for 10 minutes, in place of at 1250°C for 30 minutes.

(Comparative Example 1)

One hundred parts by mass of starch (corn starch) was heated to 600°C in a nitrogen gas atmosphere. Heating rate up to 600°C in this process was adjusted to 600°C/hour (10°C/min). Next, the starch was carbonized by heat-treatment at 600°C for 30 minutes under a nitrogen gas flow, to obtain a carbonized product. Amount of feeding of nitrogen gas in this process was adjusted to 0.5 L/min per 10 g of starch. The obtained carbonized product was then crushed in a ball mill to obtain a crushed carbonized product with a $D_{50}$ of 5.5 $\mu$m. The obtained crushed carbonized product was heated up to 1200°C, and subjected to high temperature calcination at 1200°C for 60 minutes, to obtain a carbonaceous material. Heating rate up to 1200°C in this process was adjusted to 600°C/hour (10°C/min). The heating and the heat treatment were conducted under a nitrogen gas flow. Rate of feeding of nitrogen gas was adjusted to 3 L/min per 5 g of the crushed carbonized product.

(Comparative Example 2)

One hundred parts by mass of glucose and 36 parts by mass of ammonium chloride were mixed in a mortar. The obtained mixture was heated up to 1000°C in a nitrogen gas atmosphere. Heating rate up to 1000°C in this process was adjusted to 240°C/hour (4°C/min). Next, the mixture was carbonized by heat treatment at 1000°C for 60 minutes under a nitrogen gas flow, to obtain a carbonized product (first calcination). Amount of feeding of nitrogen gas in this process was adjusted to 1 L/min per 5 g of glucose. The obtained carbonized product was then crushed in a ball mill to obtain a crushed carbonized product. The obtained crushed carbonized product was then heated up to 1200°C, and subjected to high temperature calcination at 1200°C for 60 minutes, to obtain a carbonaceous material (second calcination). Heating rate up to 1200°C in this process was adjusted to 600°C/hour (10°C/min). The heating and the heat treatment were conducted under a nitrogen gas flow. Rate of feeding of nitrogen gas was adjusted to 3 L/min per 5 g of the crushed carbonized product.

(Comparative Example 3)

One hundred parts by mass of starch (corn starch), 11.6 parts by mass of melamine (0.15 moles per mole of starch monosaccharide unit), and 7.6 parts by mass of adipic acid (0.08 moles per mole of starch monosaccharide unit) were placed, and the content was shaken to obtain a mixture (step 1). The obtained mixture was heated to 600°C in a nitrogen gas atmosphere. Heating rate up to 600°C in this process was adjusted to 600°C/hour (10°C/min). Next, the mixture was carbonized by heat-treatment at 600°C for 30 minutes under a nitrogen gas flow, to obtain a carbonized product (step 2). Amount of feeding of nitrogen gas in this process was adjusted to 0.5 L/min per 10 g of starch. The obtained carbonized product was then crushed in a ball mill to obtain a crushed carbonized product with a $D_{50}$ of 5.5

μm (step 3). The obtained crushed carbonized product was heated up to 1100°C, and subjected to a high temperature calcination step at 1100°C for 60 minutes (step 4), to obtain a carbonaceous material. Heating rate up to 1250°C in this process was adjusted to 600°C/hour (10°C/min). The heating and the heat treatment were conducted under a nitrogen gas flow. Rate of feeding of nitrogen gas was adjusted to 3 L/min per 5 g of the crushed carbonized product.

(Comparative Example 4)

A carbonaceous material was obtained in the same manner as in Comparative Example 3, except that, in the step a in the step 1 of Comparative Example 3, four parts by mass of ammonium dihydrogen phosphate was added.

(Comparative Example 5)

A carbonaceous material was obtained in the same manner as in Comparative Example 4, except that, in the step a in the step 1 of Comparative Example 4, two parts by mass of ammonium dihydrogen phosphate (0.03 moles per mole of starch monosaccharide unit) was mixed, in place of 4 parts by mass of ammonium dihydrogen phosphate.

(Comparative Example 6)

A carbonaceous material was obtained in the same manner as in Comparative Example 4, except that, in the step a in the step 1 of Comparative Example 4, six parts by mass of ammonium dihydrogen phosphate (0.08 moles per mole of starch monosaccharide unit) was mixed, in place of 4 parts by mass of ammonium dihydrogen phosphate.

(Comparative Example 7)

A carbonaceous material was obtained in the same manner as in Comparative Example 4, except that the crushed carbonized product was heated up to 1150°C and then subjected to heat treatment at 1150°C for 10 minutes, in place of heating up to 1100°C, followed by heat treatment at 1100°C for 60 minutes as in Comparative Example 4.

(Comparative Example 8)

A carbonaceous material was obtained in the same manner as in Comparative Example 4, except that the heat treatment of the crushed carbonized product was conducted by heating it up to 1200°C, and stopped heating upon arrival at 1200°C so as to immediately lower the temperature, in place of heating the crushed carbonized product up to 1100°C, followed by heat treatment at 1100°C for 60 minutes as in Comparative Example 4.

(Comparative Example 9)

In a sample bottle, 10 g of starch (corn starch), 0.2 g of melamine (0.026 moles per mole of starch monosaccharide unit), 0.76 g of adipic acid (0.08 moles per mole of starch monosaccharide unit), and 0.4 g of ammonium dihydrogen phosphate (0.06 moles per mole of starch monosaccharide unit) were placed, and the content was shaken to obtain a mixture (step 1 and step a). The obtained mixture was heated to 600°C in a nitrogen gas atmosphere. Heating rate up to 600°C in this process was adjusted to 600°C/hour (10°C/min). Next, the mixture was carbonized by heat-treatment at 600°C for 30 minutes under a nitrogen gas flow, to obtain a carbonized product (step 2). Amount of feeding of nitrogen gas in this process was adjusted to 0.5 L/min per 10 g of starch. The obtained carbonized product was then crushed in a ball mill to obtain a crushed carbonized product with a $D_{50}$ of 5.5 μm (step 3). The obtained crushed carbonized product was heated up to 1200°C, and subjected to high temperature calcination at 1200°C for 60 minutes, to obtain a carbonaceous material (step 4). Heating rate up to 1200°C in this process was adjusted to 600°C/hour (10°C/min). The heating and the heat treatment were conducted under a nitrogen gas flow. Rate of feeding of nitrogen gas was adjusted to 3 L/min per 5 g of the crushed carbonized product.

(Manufacture of Electrode)

A negative electrode was produced according to the following procedures, with use of each of the carbonaceous materials obtained in Examples and Comparative Examples.
Ninety-five parts by mass of each carbonaceous material, 2 parts by mass of conductive carbon black ("Super-P (registered trademark)", from TIMCAL), 1 part by mass of carboxymethyl cellulose (CMC), 2 parts by mass of styrene-butadiene rubber (SBR), and 90 parts by mass of water were mixed, to obtain a slurry. The obtained slurry was applied to a copper foil 15 μm in thickness, dried, then pressed, and punched out with a diameter of 14 mm, to obtain an electrode

45 $\mu$m in thickness.

(Discharge Capacity and Current Efficiency per Weight)

The electrode manufactured above was used as a working electrode, and metal lithium was used as a counter electrode and a reference electrode. Ethylene carbonate, dimethyl carbonate, and ethyl methyl carbonate were mixed while adjusting the volume ratio to 1:1:1, and used as a solvent. To the solvent, 1 mol/L of $LiPF_6$ was dissolved, and used as an electrolyte. A polypropylene film was used as the separator. A coin cell was manufactured in a glove box under an argon atmosphere.

The thus structured lithium secondary battery was subjected to charging-discharging test, with use of a charge-discharge tester ("TOSCAT", from Toyo System Co., Ltd.). Lithium was doped at a rate of 70 mA per gram of the active material, until the potential of the working electrode became 1 mV relative to the lithium potential. Doping was further continued under a constant voltage while keeping the potential relative to the lithium potential to 1 mV, and terminated when the rate slowed down to 2 mA per gram of the active materials. The capacity in this scheme was defined as a charge capacity. Lithium was then undoped at a rate of 70 mA per gram of the active material, until the potential of the working electrode became 1.5 V relative to the lithium potential. The capacity of charging in this scheme was defined as initial charge capacity (mAh), and the capacity of discharging was defined as initial discharge capacity (mAh). The thus determined initial charge capacity and the initial discharge capacity was individually divided by the weight of the negative electrode, and the quotients were defined as charge capacity per weight (mAh/g), and discharge capacity per weight (mAh/g), respectively (evaluation of initial charging-discharging). The initial discharge capacity was also divided by the initial charge capacity, and the percentage of the obtained value was defined as the current efficiency (%).

(Capacity Retention and Total Efficiency after Repetitive Charging-Discharging)

(Capacity Transition Rate after Repetitive Charging-Discharging)

The discharge capacity, obtained after repeating ten times the measurement of initial charging-discharging as conditioned above, was defined as the discharge capacity after repetitive charging-discharging. Also capacity retention after repetitive charging-discharging was estimated by the equation below.

Capacity retention (%) after repetitive charging-discharging = Discharge capacity (mAh/g) after repetitive charging-discharging/Initial discharge capacity (mAh/g) $\times$ 100

(Total Efficiency after Repetitive Charging-Discharging)

Total efficiency after repetitive charging-discharging was estimated by the equation below. The total efficiency gives indices for both degradation after the initial charging, and degradation after repetitive charging-discharging.

Total efficiency = Capacity retention after repetitive charging-discharging (%) $\times$ Current efficiency (%)/100

Each of the carbonaceous materials obtained in Examples and Comparative Examples were subjected to measurement of the nitrogen element content, hydrogen element content, oxygen element content (element analysis), oxygen element content (XPS), phosphorus element content, carbon interplanar spacing ($d_{002}$), half width of the peak at around 1360 $cm^{-1}$, and half width of the peak at around 1650 $cm^{-1}$, according to the aforementioned measurement methods. Results are summarized in Tables 1 and 2. Also each of the obtained cells was subjected to measurement of the discharge capacity and current efficiency per weight, and capacity retention and total efficiency after repetitive charging-discharging. Results are summarized in Table 2.

[Table 1]

|  |  | Nitrogen element content [% by mass] | Phosphorus element content [% by mass] | Hydrogen element content [% by mass] | $d_{002}$ [Å] | Oxygen element content (element analysis) [% by mass] | Oxygen element content(XPS) [% by mass] |
|---|---|---|---|---|---|---|---|
| Examples | 1 | 1.27 | 1.38 | 0.03 | 3.81 | 0.44 | 14.2 |
|  | 2 | 1.28 | 1.36 | 0.03 | 3.82 | 0.53 | 14.0 |
|  | 3 | 1.27 | 1.48 | 0.03 | 3.82 | 0.51 | 14.5 |
|  | 4 | 1.23 | 1.73 | 0.03 | 3.83 | 0.47 | 13.8 |
|  | 5 | 1.27 | 1.39 | 0.04 | 3.81 | 0.43 | 12.3 |
|  | 6 | 1.23 | 1.22 | 0.04 | 3.81 | 0.38 | 15.8 |
|  | 7 | 1.26 | 1.39 | 0.05 | 3.83 | 0.43 | 15.0 |
|  | 8 | 1.24 | 1.43 | 0.04 | 3.82 | 0.44 | 13.4 |
|  | 9 | 1.30 | 1.40 | 0.03 | 3.81 | 0.56 | 16.9 |
|  | 10 | 1.42 | 1.60 | 0.04 | 3.83 | 0.57 | 17.3 |
| Comparative Examples | 1 | 0.74 | - | 0.36 | 3.87 | 1.00 | 18.4 |
|  | 2 | 1.79 | - | 0.10 | 3.81 | 1.03 | 21.1 |
|  | 3 | 2.73 | - | 0.19 | 3.77 | 1.16 | 20.1 |
|  | 4 | 2.09 | 2.28 | 0.09 | 3.79 | 0.78 | 19.4 |
|  | 5 | 2.33 | 1.43 | 0.11 | 3.79 | 0.76 | 19.3 |
|  | 6 | 1.97 | 2.52 | 0.08 | 3.82 | 1.04 | 19.8 |
|  | 7 | 2.14 | 2.17 | 0.09 | 3.79 | 0.94 | 19.2 |
|  | 8 | 1.97 | 2.07 | 0.07 | 3.78 | 0.78 | 18.3 |
|  | 9 | 0.94 | 1.41 | 0.07 | 3.80 | 0.90 | 18.9 |

[Table 2]

|  |  | Half width at 1360 $cm^{-1}$ [$cm^{-1}$] | Half width at 1650 $cm^{-1}$ [$cm^{-1}$] | Initial | | After repetitive charging-discharging | | |
|---|---|---|---|---|---|---|---|---|
|  |  |  |  | Discharge capacity [mAh/g] | Current efficiency [%] | Discharge capacity [mAh/g] | Capacity retention [%] | Total efficiency [%] |
| Examples | 1 | 235 | 102 | 538 | 84.9 | 500 | 93.0 | 78.9 |
|  | 2 | 240 | 102 | 547 | 84.9 | 506 | 92.5 | 78.5 |
|  | 3 | 237 | 102 | 542 | 84.5 | 502 | 92.6 | 78.2 |
|  | 4 | 234 | 101 | 533 | 86.7 | 493 | 92.5 | 80.2 |
|  | 5 | 237 | 101 | 548 | 85.6 | 513 | 93.5 | 80.1 |
|  | 6 | 221 | 102 | 536 | 86.0 | 506 | 94.4 | 81.2 |
|  | 7 | 219 | 102 | 530 | 85.5 | 500 | 94.3 | 80.6 |
|  | 8 | 234 | 99 | 544 | 85.2 | 510 | 93.8 | 79.9 |
|  | 9 | 237 | 101 | 541 | 83.8 | 497 | 91.9 | 77.0 |
|  | 10 | 243 | 102 | 560 | 84.4 | 514 | 91.7 | 77.4 |

(continued)

| | | Half width at 1360 cm-1 [cm-1] | Half width at 1650 cm-1 [cm-1] | Initial | | After repetitive charging-discharging | | |
|---|---|---|---|---|---|---|---|---|
| | | | | Discharge capacity [mAh/g] | Current efficiency [%] | Discharge capacity [mAh/g] | Capacity retention [%] | Total efficiency [%] |
| Comparative Examples | 1 | 198 | 97 | 410 | 79.0 | 410 | 100 | 79.0 |
| | 2 | 239 | 99 | 509 | 80.4 | 460 | 90.4 | 72.7 |
| | 3 | 271 | 103 | 541 | 78.1 | 500 | 92.4 | 72.2 |
| | 4 | 265 | 103 | 630 | 83.0 | 568 | 90.2 | 74.9 |
| | 5 | 270 | 103 | 597 | 82.0 | 546 | 91.4 | 75.0 |
| | 6 | 263 | 102 | 623 | 81.4 | 561 | 90.0 | 73.3 |
| | 7 | 269 | 103 | 633 | 81.8 | 569 | 89.8 | 73.5 |
| | 8 | 265 | 102 | 615 | 82.0 | 560 | 91.0 | 74.6 |
| | 9 | 225 | 100 | 539 | 82.9 | 493 | 91.4 | 75.7 |

The batteries manufactured with use of the carbonaceous materials of the individual Examples were found to demonstrate high discharge capacity per weight, and excellent current efficiency. The batteries were also found to demonstrate high discharge capacity even after the charging-discharging repeated 10 times, and to demonstrate high capacity retention and high total efficiency. In contrast, the batteries manufactured with use of the carbonaceous materials of the individual Comparative Examples, whose nitrogen element content, hydrogen element content, and/or phosphorus element content do not satisfy the predetermined values, were found to be insufficient in terms of the discharge capacity per weight, or in terms of current efficiency, and were found to be further degraded in the capacity retention and the total efficiency after the repetitive charging-discharging repeated 10 times.

**Claims**

1. A carbonaceous material having a nitrogen element content of 1.0% by mass or more and a hydrogen element content of 0.1% by mass or less, both measured by element analysis, and a phosphorus element content, measured by X-ray fluorescence analysis, of 0.5% by mass or more and 2.0% by mass or less.

2. The carbonaceous material according to claim 1, having a carbon interplanar spacing ($d_{002}$), measured by X-ray diffractometry, of 3.65 Å or more.

3. The carbonaceous material according to claim 1 or 2, having an oxygen element content, measured by element analysis, of less than 1.0% by mass.

4. The carbonaceous material according to any one of claims 1 to 3, having an oxygen element content, measured by XPS, of less than 18% by mass.

5. The carbonaceous material according to any one of claims 1 to 4, demonstrating a Raman spectrum observed by laser Raman spectrometry, in which a peak at around 1360 cm-1 has a half width of 210 cm-1 or more.

6. The carbonaceous material according to any one of claims 1 to 5, for use as a negative electrode carbonaceous material of a power storage device.

7. A negative electrode for a power storage device, comprising the carbonaceous material according to any one of claims 1 to 6.

8. A power storage device comprising the negative electrode for a power storage device according to claim 7.

9. A method for producing the carbonaceous material according to any one of claims 1 to 6, the method comprising at least:

   (1) a step of mixing a sugar skeletal compound with a nitrogen-containing compound to obtain a mixture;
   (2) a step of heat-treating the mixture in an inert gas atmosphere at 500 to 900°C to obtain a carbonized product;
   (3) a step of crushing and/or classifying the carbonized product; and
   (4) a step of heat-treating the thus crushed and/or classified carbonized product in an inert gas atmosphere at 1200 to 1600°C to obtain the carbonaceous material, and
   the method further comprising:

   (a), a step of mixing, prior to the heat treatment in the step (4), the sugar skeletal compound, the mixture that contains the compound, or the carbonized product of the mixture, with a phosphorus-containing compound.

10. The method according to claim 9, wherein the step (4) is conducted in presence of a volatile organic substance, or the method further comprising, subsequent to the step (4), a step (5) of further conducting the heat treatment in presence of a volatile organic substance.

## INTERNATIONAL SEARCH REPORT

International application No.

**PCT/JP2022/035918**

| A. | CLASSIFICATION OF SUBJECT MATTER |
|---|---|

*C01B 32/00*(2017.01)i; *C01B 32/05*(2017.01)i; *C04B 35/52*(2006.01)i; *H01G 11/24*(2013.01)i; *H01G 11/42*(2013.01)i; *H01G 11/86*(2013.01)i; *H01M 4/587*(2010.01)i
FI: C01B32/00; H01M4/587; H01G11/42; H01G11/24; H01G11/86; C01B32/05; C04B35/52

According to International Patent Classification (IPC) or to both national classification and IPC

| B. | FIELDS SEARCHED |
|---|---|

Minimum documentation searched (classification system followed by classification symbols)

C01B32/00-32/991; C04B35/52; H01G11/24; H01G11/42; H01G11/86; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2009-200014 A (SUMITOMO BAKELITE CO LTD) 03 September 2009 (2009-09-03) claims, paragraphs [0009]-[0013], [0026], [0029], [0043]-[0066] | 1-8 |
| A | | 9-10 |
| Y | WO 2019/009333 A1 (KURARAY CO., LTD.) 10 January 2019 (2019-01-10) claims, paragraphs [0006]-[0023], [0035]-[0048], [0071]-[0094] | 1-10 |
| Y | WO 2019/235469 A1 (NEC CORPORATION) 12 December 2019 (2019-12-12) abstract, claims, paragraphs [0006]-[0012] | 1-10 |
| Y | JP 2018-95517 A (SHOWA DENKO KK) 21 June 2018 (2018-06-21) abstract, claims | 1-10 |
| A | WO 2019/009332 A1 (KURARAY CO., LTD.) 10 January 2019 (2019-01-10) entire text | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/035918**

| Patent document cited in search report | | | Publication date (day/month/year) | Patent family member(s) | | | Publication date (day/month/year) |
|---|---|---|---|---|---|---|---|
| JP | 2009-200014 | A | 03 September 2009 | (Family: none) | | | |
| WO | 2019/009333 | A1 | 10 January 2019 | US claims, examples EP claims, examples CN KR | 2021-0094826 003650410 110799456 10-2020-00024784 | A1 A1 A A | |
| WO | 2019/235469 | A1 | 12 December 2019 | US claims, abstract | 2021-0230002 | A1 | |
| JP | 2018-95517 | A | 21 June 2018 | (Family: none) | | | |
| WO | 2019/009332 | A1 | 10 January 2019 | US entire text EP entire text CN KR | 2021-0098788 003650409 11086317 10-2020-0024783 | A1 A1 A A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019009332 A
- WO 2019009333 A
- JP 2009200014 A